# EUROPÄISCHE PATENTSCHRIFT

(11) **EP 2 582 444 B1**
(45) Veröffentlichungstag und Bekanntmachung des Hinweises auf die Patenterteilung: **13.08.2014**
(21) Anmeldenummer: 11726401.0
(22) Anmeldetag: 14.06.2011
(51) Int. Cl.: B01D 46/52, B01D 46/00, B01D 46/10, B01D 46/42

(54) **FILTEREINSATZ**
FILTER INSERT
CARTOUCHE FILTRANTE

(30) Priorität: 16.06.2010 DE 102010023973
(43) Veröffentlichungstag der Anmeldung: 24.04.2013
(73) Patentinhaber: Mahle International GmbH, 70376 Stuttgart (DE)
(72) Erfinder: DISSON, Ralf, 71397 Leutenbach (DE); GOLDMANN, Dieter, 71706 Markgröningen (DE); HANDEL, Rainer, 70597 Stuttgart (DE); ROTHER, Thilo, 70372 Stuttgart (DE); SCHWÖRER, Falko, 70569 Stuttgart (DE); TRAUB, Matthias, 71034 Böblingen (DE); VON MERKATZ, Hendrik, 71686 Remseck (DE)
(74) Vertreter: BRP Renaud & Partner
(86) Internationale Anmeldenummer: PCT/EP2011/059840
(87) Internationale Veröffentlichungsnummer: WO 2011/157706

(56) Entgegenhaltungen:
- EP-A1- 2 135 662
- DE-A1- 10 328 002
- DE-A1-102007 024 287
- DE-U1-202005 003 046
- DE-U1-202008 013 309
- GB-A- 2 162 087
- JP-A- 61 275 562

## Beschreibung

Die Erfindung bezieht sich auf einen in ein Filtergehäuse einsetzbaren Filtereinsatz gemäß dem Oberbegriff des Anspruches 1.

Ein solcher Filtereinsatz ist aus der DE 10 2007 024 287 A1 bekannt.

Aus der DE 103 28 002 A1 ist ein ringförmiger, radial durchströmbarer, austauschbar in ein Filtergehäuse einsetzbarer Gas-Filtereinsatz, insbesondere eines Luftansaugfilters eines Kraftfahrzeug-Verbrennungsmotors bekannt, wobei ein Ringbereich dieses Filtereinsatzes von einer mit Bezug auf diesen Bereich radial verlaufenden Öffnung zum Zu- oder Abführen ungefilterten bzw. gefilterten Gases durchsetzt ist. Zumindest eine der beiden Stirnseiten des radial innerhalb des Ringkörpers liegenden Bereiches ist dabei offen ausgeführt ist, wobei die Stirnseiten des gefalteten Filtermaterials gedichtet sind und eine umlaufende, axial wirkende Dichtung besitzen.

Aus der DE 20 2005 003 046 A1 ist ein Filtereinsatz eines Gasfilters mit einem bogen- oder ringförmig verlaufenden Filtermedium sowie mit einem das Gas führenden Stutzen bekannt, welcher das Filtermedium unterbrechend an das Filtermedium anschließt und wobei der flach liegend ausgerichtete Filtereinsatz eine Ober- und eine Unterkante aufweist. Der Stutzen erstreckt sich dabei über die Oberkante des Filtereinsatzes.

Derartige Filtereinsätze werden insbesondere für Luftfilteranordnungen großer Dieselmotoren konzipiert, wobei zur Aufnahme des Filtereinsatzes ein Filtergehäuse vorgesehen ist, in das sich der Filtereinsatz nach Art einer Schublade zwischen zwei Gehäusestirnwänden einschieben lässt, wobei der Filtereinsatz durch miteinander zusammenwirkende Führungsprofile an den Innenseiten der Gehäusestirnwände und den diesen zugewandten Seiten der Bodenscheiben in eine Solllage geführt wird, in der die die Filterwand durchsetzende Öffnung des Filtereinsatzes an einen Rohraumeingang oder einen Reinraumausgang des Filtergehäuses anschließt. Dementsprechend bildet der von den Bodenscheiben und der Filterwand umschlossene Innenraum des Filtereinsatzes entweder den Rohraum oder den Reinraum der Filteranordnung, während ein innerhalb des Filtergehäuses vor der Filterwand verbleibender Abstandsraum den Rein- oder den Rohraum bildet.

Der Filtereinsatz muss bei einer solchen Filteranordnung ein leicht handhabbares stabiles Teil darstellen, um den Belastungen beim Filterbetrieb bzw. beim Filterwechsel problemlos standhalten zu können. Insbesondere muss gewährleistet sein, dass die die Filterwand durchsetzende Öffnung eine hinreichende Stabilität aufweist.

Diese Aufgabe wird bei einem Filtereinsatz der eingangs angegebenen Art erfindungsgemäß durch die kennzeichnenden Merkmale des Anspruches 1 gelöst.

Um eine große Filterfläche bieten zu können, ist für die Filterwand in bekannter Weise eine plissierte Bahn aus Filtermaterial vorgesehen, wobei die Plisseefalze bzw. Faltenrücken im Wesentlichen orthogonal zu den Bodenscheiben ausgerichtet sind. Zur sauberen Anbindung des Filtermaterials an die Flanschplatte ist vorgesehen, dass an der Flanschplatte in zumindest eine, vorzugsweise mehrere Plisseefalze eingreifende Schwerter angeordnet oder angeformt sind, so dass auch hier eine formschlüssige Anbindung gewährleistet wird. Zur Abdichtung des Anschlusses der Flanschplatte an die Filterwand können auf die vorgenannten Schwerter bzw. in den Zwischenraum zwischen den Schwertern Klebstoffschäume oder-raupen aufgetragen werden, die dann bei Anordnung der Flanschplatte an den Bodenscheibe eine zuverlässige und dichte Verbindung zwischen Flanschplatte und Filtermaterial sicherstellen. Die Schwerter sind beabstandet zu den Faltenrücken der Plisseefalten angeordnet und der Abstand ist durch Kleber überbrückt.

Des Weiteren bietet die Flanschplatte eine stabile Basis für ein gegebenenfalls im Innenraum des Filtereinsatzes an der Öffnung erwünschtes Ein- oder Ausströmrohr.

Im Übrigen wird hinsichtlich bevorzugter Merkmale der Erfindung auf die Ansprüche und die nachfolgende Erläuterung der Zeichnung verwiesen, anhand der eine bevorzugte Ausführungsform der Erfindung näher beschrieben wird.

Schutz wird nicht nur für angegebene oder dargestellte Merkmalskombinationen, sondern auch für prinzipiell beliebige Kombinationen der angegebenen oder dargestellten Einzelmerkmale beansprucht.

In der Zeichnung zeigt,
- Fig. 1: eine teilweise geschnittene Darstellung einer Luftfilteranordnung, in deren Gehäuse ein erfindungsgemäßer Filtereinsatz angeordnet ist,
- Fig. 2: eine schematisierte, teilweise geschnittene Draufsicht auf Filtereinsätze mit unterschiedlichen Formen
- Fig. 3: eine perspektivische Ansicht eines geöffneten Filtereinsatzes, wobei eine Bodenscheibe entfernt ist,
- Fig. 4: den Ausschnitt IV gemäß Figur 1 und
- Fig. 5: den Ausschnitt IV in einer alternativen Ausgestaltung.

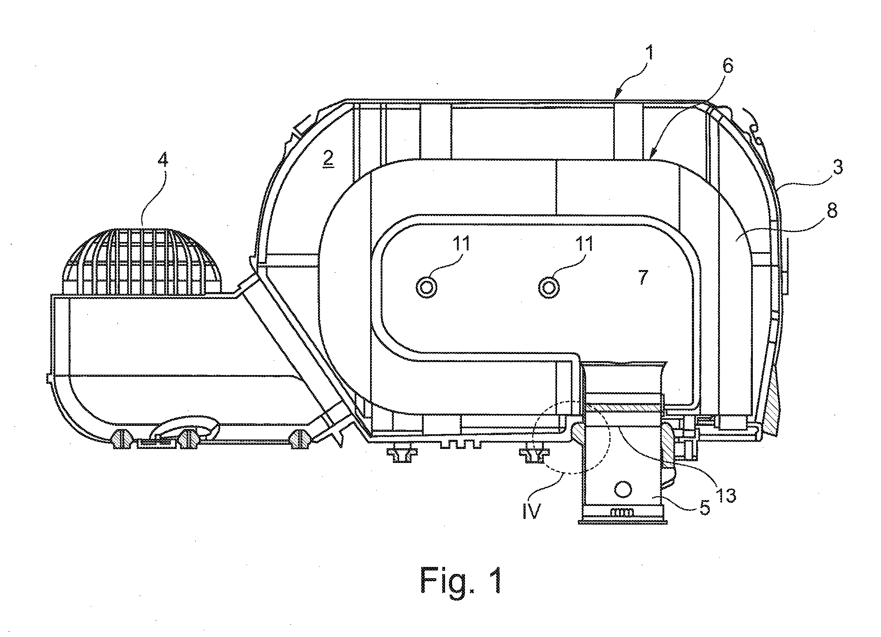

Die in Fig. 1 dargestellte Luftfilteranordnung besitzt ein Gehäuse 1 mit zur Zeichnungsebene parallelen Stirnwänden 2 und einer die Stirnwände 2 verbindenden Umfangswand 3. An der Umfangswand sind ein Rohraumeingang 4 und ein Reinraumausgang 5 angeordnet.

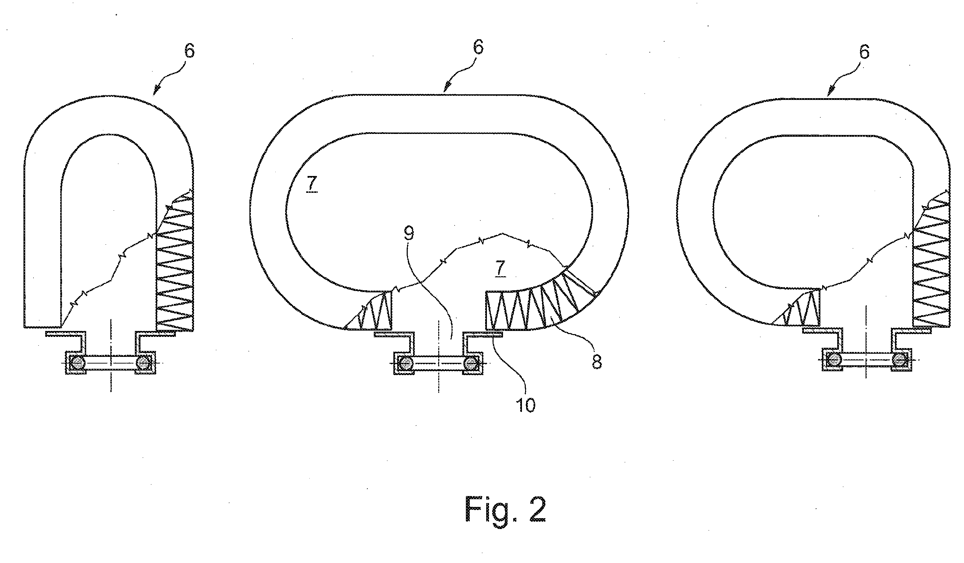

Innerhalb des Gehäuses 1 befindet sich ein Filtereinsatz 6, mit zwei den Innenseiten der Stirnwände 2 des Gehäuses benachbarten Bodenscheiben 7 und einer zu den Bodenscheiben 7 im Wesentlichen orthogonalen Filterwand 8, die gemäß Fig. 2 durch eine plissierte Bahn aus Filtermaterial gebildet ist, wobei die Plisseefalten und -falze im Wesentlichen orthogonal zu den Bodenscheiben 7 ausgerichtet sind. Die Filterwand 8 ist an einander gegenüberliegenden Randzonen der Bodenscheiben 7 dicht mit den Bodenscheiben 7 verbunden.

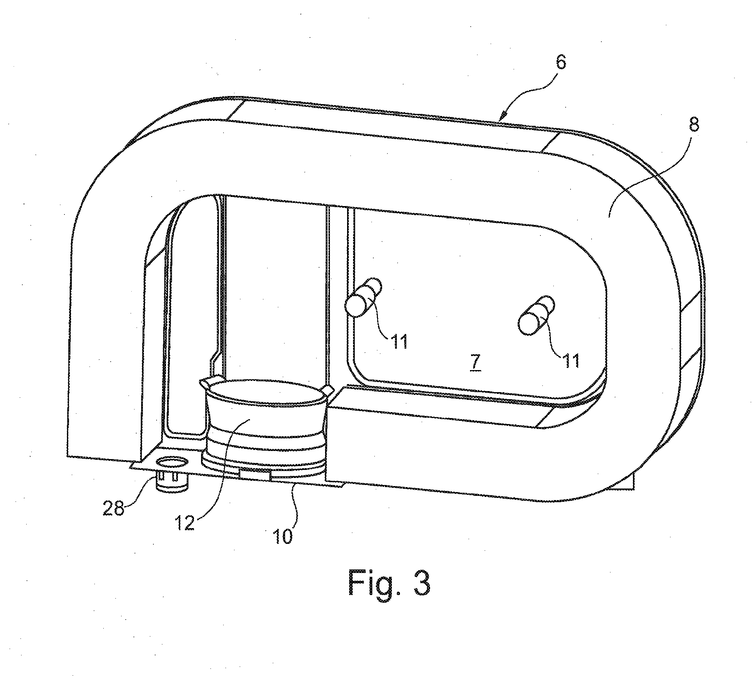

Die Filterwand 8 wird von einer Öffnung 9 durchsetzt, die im dargestellten Beispiel mit dem Reinraumausgang 5 verbunden ist, so dass der Innenraum des Filtereinsatzes 6 den Reinraum bildet und der innerhalb des Gehäuses 1 außerhalb der Filterwand 8 verbleibende Abstandsraum den Rohraum darstellt. Grundsätzlich ist jedoch auch eine Anordnung denkbar, bei der der Innenraum des Filtereinsatzes 6 als Rohraum und der innerhalb des Gehäuses 1 außerhalb des Filtereinsatzes 6 verbleibende Abstandsraum als Reinraum vorgesehen sind. Wie insbesondere den Fig. 2 und 3 entnommen werden kann, ist die Öffnung 9 in einer Flanschplatte 10 angeordnet, die vorzugsweise formschlüssig mit den Bodenscheiben 7 verbunden ist, so dass die Solllage der Flanschplatte 10 durch den genannten Formschluss exakt vorgegeben wird. Damit wird gleichzeitig die Abdichtung zwischen den Bodenscheiben 7 und der Flanschplatte 10 erleichtert.

Die Formschlussverbindungen können mit PU-Schaum oder einer Klebstoffraupe überdeckt werden. Stattdessen ist es auch möglich, vor der formschlüssigen Befestigung der Flanschplatte 10 an den Bodenscheiben 7 innerhalb eines Verbindungsbereichs PU-Schaum oder Klebstoffraupen aufzubringen, so dass bei der Anordnung der Flanschplatte 10 an den Bodenscheiben 7 auch die notwendige Abdichtung erfolgt.

Zur dichten Anbindung der Flanschplatte 10 an die plissierte Filterwand 8 können auf der der Filterwand 8 zugewandten Seite der Flanschplatte 10 in die Plisseefalten hineinragende bzw. eindringende Stege oder Schwerter angeordnet sein, so dass ein labyrinthartiger Formschluss vorliegt. Zusätzlich wird auf der der Filterwand 8 zugewandten Seite der Flanschplatte 10 PU-Schaum aufgetragen, insbesondere an bzw. zwischen den vorgenannten Stegen oder Schwertern, so dass die Flanschplatte 10 bei ihrer Anordnung an den Bodenscheiben 7 dicht mit der Filterwand 8 verbunden wird.

Wie insbesondere die Fig. 1 und 3 zeigen, können zwischen den Bodenscheiben 7 innerhalb des von der Filterwand 8 umschlossenen Raums säulenartige Verbindungen 11 angeordnet sein, die die Bodenscheiben 7 auf Druck und Zug belastbar zusammenhalten. Dabei können an den Bodenscheiben 7 jeweils Halbsäulen angeordnet sein, die sich steckerartig unlösbar verbinden lassen, wenn der Filtereinsatz 6 zusammengebaut wird. Die Höhe der säulenartigen Verbindungen 11 ist an die Höhe der Filterwand 8 angepasst, so dass diese zwischen den Bodenscheiben 7 weitestgehend spannungsfrei bleibt.

Um die Anordnung der plissierten Filterwand 8 zu erleichtern, können auf den Innenseiten der Bodenscheiben 7 Raupen aus PU-Schaum bzw. Klebstoff angeordnet sein, so dass sich bei Aushärtung dieses Materials entsprechende Wülste ergeben, die nach Art von Zargen den für die plissierte Filterwand 8 vorgesehenen Raum begrenzen. Im Übrigen werden die Stirnränder der Filterwand 8 dadurch dicht mit den zugewandten Seiten der Bodenscheiben 7 verbunden, dass die Stirnränder der Filterwand 8 und/oder die zum Anschluss an die Filterwand 8 vorgesehenen Randzonen der Bodenscheiben 7 mit Klebstoff oder PU-Schaum belegt werden.

Die Flanschplatte 10 kann gegebenenfalls als stabile Basis für ein an der Öffnung 9 des Filtereinsatzes 6 angeordnetes Ein- oder Ausströmrohr 12 dienen, um die Strömungsverhältnisse innerhalb des Filtereinsatzes 6 zu optimieren.

Weiterhin kann die Flanschplatte 10 über einen, zusätzlich zum Ein-/Ausströmrohr 12 angeordneten rohrförmigen Stutzen 28 verfügen. Der Stutzen 28 kann, wie dargestellt, parallel oder alternativ winklig zu dem Ausströmrohr 12 angeordnet sein. Dieser Stutzen 28 verbindet das Innere des Filtereinsatzen 6 mit einem zugeordneten Anschluss im Filtergehäuse 1. Über diesen Stutzen 28 kann gereinigte Luft abgezweigt werden, wenn sie für eine andere Aufgabe, wie z.B. die Sekundärlufteinblasung, genutzt werden soll. Der Stutzen 28 ist optional und kann bei anderen Ausführungen auch weggelassen werden.

Im Übrigen kann an dem die Öffnung 9 im montierten Zustand des Filtereinsatzes 6 durchsetzenden Rohrstutzen des Reinraumausgangs 5 des Gehäuses 1 ein bspw. siebartiger Sicherheitseinsatz 13 angeordnet sein, welcher gegebenenfalls mehr oder weniger weit in den Innenraum des Filtereinsatzes hinein ragen kann.

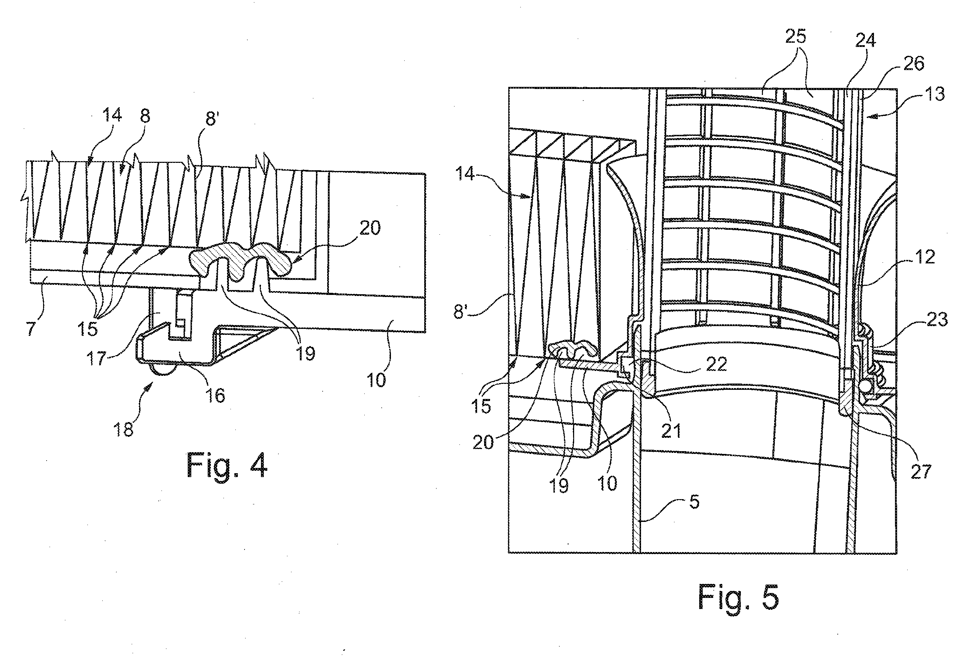

In Figur 4 ist der Ausschnitt IV aus Figur 1 dargestellt. Die Filterwand 8 besteht aus einem dünnen, plissierten Filtermedium 8'. Das Filtermedium 8' kann beispielsweise Zellulose enthalten oder durch ein synthetisches Faservlies oder aus einem Gemisch von Zellulose und synthetischen Fasern gebildet sein. Das Filtermedium 8' verfügt über Falten 14 mit Faltenrücken 15, welche im wesentlichen orthogonal zu den Bodenscheiben 7 verlaufen. Die Flanschplatte 10 verfügt über einen Schnapphaken 16, welcher mit einer an der Bodenscheibe 7 angeordneten Gegenkontur 17 zusammenwirkt, um eine Schnappverbindung 18 zu bilden.

Weiterhin verfügt die Flanschplatte 10 über zwei Schwerter 19, welche in Richtung der Faltenrücken 15 weisen. Die Anzahl der Schwerter 19 kann in Abhängigkeit der erwünschten Festigkeit/Stabilität des Filtereinsatzes variiert werden. Hierbei ist es möglich, auch nur ein einziges Schwert 19 vorzusehen oder, für eine stabilere Verbindung, eine größere Anzahl, z.B. drei bis fünf, Schwerter 19. Die Schwerter 19 sind keilförmig, mit zwei winklig zueinander verlaufenden ebenen Flanken, ausgebildet. Bei anderen Ausgestaltungen können die Schwerter 19 auch über profilierte Flanken verfügen, die miteinander einen tannenbaumförmigen Querschnitt bilden. Zwischen den Schwertern 19 und den Faltenrücken 15 ist ein Kleber 20 angeordnet, der eine dichtende Verbindung zwischen dem Filtermedium 8' und den Schwertern 19 der Flanschplatte 10 erzeugt. Bei diesem Ausführungsbeispiel sind die Schwerter 19 erfindungsgemäß beabstandet zu den Faltenrücken 15 angeordnet. Der Abstand zwischen den Fügepartnern ist durch den Kleber 20 überbrückt.

In Figur 5 ist der Ausschnitt IV aus Figur 1 in einer alternativen Ausgestaltung dargestellt. Im Prinzip entspricht die Verbindung der Flanschplatte 10 mit dem Filtermedium 8' der in Figur 4 dargestellten Verbindung. Auch die unterschiedlichen zu Figur 4 beschriebenen Varianten können auf die Figur 5 angewendet werden. Der Unterschied zu Figur 4 liegt in dem Abstand der Schwerter 19 zu den Faltenrücken 15. Bei dieser nicht unter die Erfindung fallenden Ausgestaltung dringen die Schwerter 19 zwischen die Falten 14 ein, wodurch ein Überschneidungsbereich zwischen den Schwertern 19 und den Falten 14 gebildet ist. In diesem Überschneidungsbereich bildet der Kleber 20 die dichtende Verbindung zwischen den Schwertern 19 der Flanschplatte und den Falten 14 des Filtermediums 8'. Die Faltenrücken 15 können, wie in Fig. 5 dargestellt, die Flanschplatte 10 berühren. Bei anderen Ausführungsbeispielen müssen die Faltenrücken 15 jedoch keinen Kontakt zu der Flanschplatte 10 aufweisen. Bei derartigen Ausführungsformen sind die Faltenrücken 15 an einer beliebigen Stelle zwischen der Flanschplatte 10 und den Spitzenbereichen der Schwerter 19 angeordnet.

Im dargestellten Ausführungsbeispiel ist das Ausströmrohr 12 trichterförmig ausgestaltet, wobei die obere Öffnung des Ausströmrohrs 12 etwa der Höhe h des Filtermediums 8' entspricht. Somit kann die gereinigte Luft ohne abrupte Richtungsänderungen in den Reinraumausgang 5 strömen. Weiterhin verfügt das Ausströmrohr 12 über eine Dichtungsaufnahme 21, in welche ein O-Ring 22 einlegbar ist. Durch den O-Ring 22 ist der Filtereinsatz 6 dichtend auf den Reinraumausgang 5 aufschiebbar. Außerdem ist an dem Ausströmrohr 12 ein umlaufender Absatz 23 angeordnet, welcher den Reinraumausgang 5 derart aufnimmt, dass keine Störkontur im Strömungsweg der gereinigten Luft gebildet ist.

Bei der dargestellten Ausführungsform der Erfindung ist in dem Reinraumausgang 5 der Sicherheitseinsatz 13 eingeschoben dargestellt. Der Sicherheitseinsatz verfügt über eine Stützgeometrie 24, welche rohrförmig mit Durchlässen 25 ausgebildet ist. Die Stützgeometrie 24 stellt keinen nennenswerten Strömungswiderstand dar. Um die Stützgeometrie 24 herum ist ein Sicherheitsfiltermedium 26 angeordnet, welches verhindert, dass z.B. beim Filterwechsel oder bei einem beschädigten Filtermedium 8' Verunreinigungen in den Reinraumausgang 5 gelangen. Zur Erfüllung dieser Aufgabe verfügt der Sicherheitseinsatz 13 zusätzlich noch über eine Dichtung 27.

Beim Wechsel des Filtereinsatzes 6 kann dieser aus dem Gehäuse 1 entfernt werden und der Sicherheitseinsatz 13 verbleibt im Reinraumausgang 5. In gleicher Weise kann der neue Filtereinsatz 6 wieder montiert werden, ohne dass der Sicherheitseinsatz 13 entfernt werden muss. Sofern der Sicherheitseinsatz 13 erneuert werden muss, ist der Filtereinsatz 6 aus dem Gehäuse 1 zu entfernen und anschließend kann der Sicherheitseinsatz 13 entnommen werden. Dieser muss dann durch einen neuen Sicherheitseinsatz 13 ersetzt werden, bevor der Filtereinsatz 6 wieder montiert werden kann.

## Patentansprüche

1. In ein Filtergehäuse (1) einsetzbarer Filtereinsatz (6) mit zwei voneinander beabstandeten, einander gegenüberliegenden, insbesondere parallelen Bodenscheiben (7) und einer mit Randzonen der Bodenscheiben verbundenen Filterwand (8), welche von einer an einen Rohraum- oder Reinraumausgang (5) des Gehäuses (1) anschließbaren Öffnung (9) durchsetzt wird, die in einer mit den Bodenscheiben (7) dicht verbundenen Flanschplatte (10) angeordnet ist, wobei die Filterwand (8) als plissierte Bahn aus Filtermaterial mit im Wesentlichen orthogonal zu den Bodenscheiben (7) ausgerichteten Plisseefalzen und Faltenrücken ausgebildet und die Flanschplatte (10) dichtend mit den Plisseefalzen (15) verbunden und zwischen den Bodenscheiben (7) und der Flanschplatte (10) eine Formschluss- bzw. Schnappverbindung (18) gebildet ist,
**dadurch gekennzeichnet,**
- **dass** die Flanschplatte (10) an ihr angeordnete bzw. angeformte Stege/Schwerter (19) aufweist, die in Richtung eines Plisseefalzes (15) der Filterwand (8) weisen,
- **dass** die Schwerter (19) beabstandet zu den Faltenrücken der Plisseefalten (14) angeordnet sind und der Abstand durch Kleber (20) überbrückt ist.

2. Filtereinsatz nach Anspruch 1, **dadurch gekennzeichnet, dass** die Stege oder Schwerter (19) keilförmig ausgebildet sind.

3. Filtereinsatz nach Anspruch 1 oder 2, **dadurch gekennzeichnet, dass** zwischen den Stegen oder Schwertern (19) und der Filterwand (8) ein Kleber (20) angeordnet ist, der eine dichtende Verbindung bildet.

4. Filtereinsatz nach einem der Ansprüche 1 bis 3, **dadurch gekennzeichnet, dass** an der Flanschplatte (10) ein zur Öffnung (9) gleichachsiges Ein- oder Ausströmrohr (12) angeordnet ist, welches in den Filtereinsatz (6) hineinragt.

5. Filtereinsatz nach einem der Ansprüche 1 bis 4, **dadurch gekennzeichnet, dass** die Flanschplatte (10) über einen zusätzlichen rohrförmigen Stutzen (28) verfügt, über den der Innenraum des Filtereinsatzes (6) mit einem Zusatzaggregat verbindbar ist.

6. Filtereinsatz nach einem der Ansprüche 1 bis 5, **dadurch gekennzeichnet, dass** zwischen den Bodenscheiben (7) säulenartige Verbindungskörper (11) angeordnet sind, die die Bodenscheiben (7) zug- und druckfest miteinander verbinden.

## Claims

1. A filter insert (6) that can be inserted into a filter housing (1) and that has two spaced and opposing base discs (7) that are in particular parallel to one another, and has a filter wall (8) which is connected to edges zones of the base discs (7) and through which an opening (9) passes which can be connected to an uncleaned chamber or clean chamber outlet (5) of the housing (1) and which opening is arranged in a flange plate (10) that is connected to the base discs (7) in a leak-proof manner, wherein the filter wall (8) is formed as a pleated web of filter material having pleat folds and fold backs which are aligned substantially orthogonal to the base discs (7), and the flange plate (10) is sealingly connected to the pleat folds (15), and a form-fitting connection and/or snap connection (18) is formed between the base discs (7) and the flange plate (10),
**characterized in**
- **that** flange plate (10) comprises webs/blades (19) arranged and formed thereon that point in the direction of a pleat fold (15) of the filter wall (8),
- **that** the blades (19) are arranged spaced apart from the fold backs of the pleat folds (14), and the spacing is bridged by adhesive (20).

2. The filter insert according to claim 1, **characterized in that** the webs or blades (19) are wedge-shaped.

3. The filter insert according to claim 1 or claim 2, **characterized in that** an adhesive (20) is arranged between the webs or blades (19) and the filter wall (8), which adhesive forms a sealing connection.

4. The filter insert according to any one of the claims 1 to 3, **characterized in that** an inflow or outflow pipe (12), which is coaxial to the opening (9), is arranged on the flange plate (10) and projects into the filter insert (6).

5. The filter insert according to any one of the claims 1 to 4, **characterized in that** the flange plate (10) has an additional tubular connecting piece (28) via which the interior of the filter insert (6) can be connected to an additional unit.

6. The filter insert according to any one of the claims 1 to 5, **characterized in that** columnar connecting bodies (11) are arranged between the base discs (7), which connecting bodies connect the base discs (7) to one another in a tension- and pressure-resistant manner.

## Revendications

1. Cartouche filtrante (6) insérable dans un logement de filtre (1) comportant deux disques de fond (7) séparés l'un de l'autre, en vis à vus l'un de l'autre et notamment parallèles et une paroi de filtre (8) reliée aux zones de bord des disques de fond, qui est traversée par une ouverture (9) pouvant se rattacher à une sortie d'espace brut ou d'espace purifié (5) du logement (1), qui est disposée dans une plaque de bride (10) reliée de manière étanche aux disques de fond (7), dans laquelle la paroi de filtre (8) est conçue comme une bande plissée constituée d'un matériau filtrant avec des plis plissés et des dos de plis réalisés essentiellement orthogonalement aux disques de fond (7) et la plaque de bride (10) est reliée de manière étanche aux plis plissés (15) et, entre les disques de fond (7) et la plaque de bride (10), une liaison par conjonction de forme, respectivement par encliquetage (18) est formée, **caractérisée en ce que**
- la plaque de bride (10) présente des gradins/épées (19) disposés, respectivement façonnés sur celle-ci, qui sont orientés dans la direction d'un pli plissé (15) de la paroi de filtre (8),
- les épées (19) sont disposées en espacement par rapport aux dos de plis des plis plissés (14) et l'espacement est comblé par un adhésif (20).

2. Cartouche filtrante selon la revendication 1, **caractérisée en ce que** les gradins ou les épées (19) sont réalisés de manière cunéiforme.

3. Cartouche filtrante selon la revendication 1 ou 2, **caractérisée en ce que** entre les gradins ou les épées (19) et la paroi de filtre (8), un adhésif (20) est disposé, qui forme une liaison étanche.

4. Cartouche filtrante selon une des revendications 1 à 3, **caractérisée en ce que** sur la plaque de bride (10), un tuyau d'menée ou d'évacuation (12) coaxial à l'ouverture (9) est disposé, qui dépasse en saillie à l'intérieur de la cartouche filtrante (6).

5. Cartouche filtrante selon une des revendications 1 à 4, **caractérisée en ce que** la plaque de bride (10) dispose d'un embout (28) tubulaire supplémentaire, par l'intermédiaire duquel l'espace intérieur de la cartouche filtrante (6) peut être relié à un groupe supplémentaire.

6. Cartouche filtrante selon une des revendications 1 à 5, **caractérisée en ce que** entre les disques de fond (7), des corps de liaison (11) de type colonne sont disposés, qui relient les uns aux autres les disques de fond de manière résistante à la traction et à la pression.
